# EUROPEAN PATENT SPECIFICATION

(11) **EP 4 700 528 B1**
(45) Date of publication and mention of the grant of the patent: **28.10.2026**
(21) Application number: 25196899.6
(22) Date of filing: 20.08.2025
(51) Int. Cl.: G05F 1/56, G05F 1/575, G05F 3/26

(54) **HIGH-PRECISION CURRENT SOURCE AND ELECTRONIC DEVICE**
HOCHPRÄZISE STROMQUELLE UND ELEKTRONISCHE VORRICHTUNG
SOURCE DE COURANT DE HAUTE PRÉCISION ET DISPOSITIF ÉLECTRONIQUE

(30) Priority: 22.08.2024 CN 202411157416
(43) Date of publication of application: 25.02.2026
(73) Proprietor: SUZHOU C*Core Technology Co., Ltd., Suzhou, Jiangsu 215011 (CN)
(72) Inventor: ZHENG, Jiang, Suzhou, Jiangsu, 215011 (CN); XU, Xin, Suzhou, Jiangsu, 215011 (CN); XU, Xiuqiang, Suzhou, Jiangsu, 215011 (CN); XIAO, Zuonan, Suzhou, Jiangsu, 215011 (CN); KUANG, Qihe, Suzhou, Jiangsu, 215011 (CN)
(74) Representative: Winter, Brandl - Partnerschaft mbB

(56) References cited:
- EP-A1- 3 893 397
- CN-A- 113 282 130
- AZCONA C ET AL: "Low-voltage low-power CMOS rail-to-rail V-I converters", CIRCUIT THEORY AND DESIGN (ECCTD), 2011 20TH EUROPEAN CONFERENCE ON, IEEE, 29 August 2011 (2011-08-29), pages 182 - 185, XP031975507, ISBN: 978-1-4577-0617-2, DOI: 10.1109/ECCTD.2011.6043312

## Description

### TECHNICAL FIELD

The present disclosure relates to the field of high-precision circuit design, in particular to a high-precision current source and an electronic device.

### BACKGROUND

In an airbag ignition circuit, if the ignition current precision is poor, it may lead to false ignition, missed ignition, or delayed ignition of the airbag. Therefore, the precision of the ignition current directly affects the function of the airbag, thereby affecting its protection effect on a driver and passenger(s).

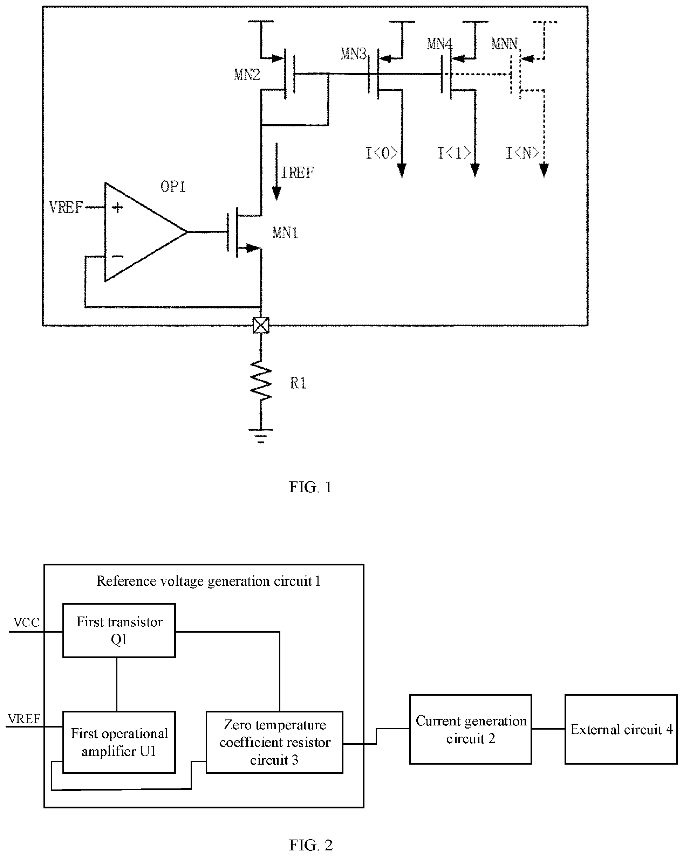

In the ignition circuit, all the current is sourced from an internal current source. The existing current source circuit is shown in Fig. 1, and includes an operational amplifier OP1, transistors MN1, MN2, MN3 and MN4, and a resistor R1. A non-inverting input terminal of the operational amplifier OP1 is connected to a bias voltage source inside a chip; an inverting input terminal of the operational amplifier OP1 is connected to a first terminal of the resistor R1 and a first terminal of the transistor MN1; an output terminal of the operational amplifier OP1 is connected to a second terminal of the transistor MN1; a second terminal of the resistor R1 is grounded; a third terminal of the transistor MN1 is connected to a first terminal of the transistor MN2, a second terminal of the transistor MN2, a first terminal of the transistor MN3, a first terminal of the transistor MN4, and a first terminal of the transistor MNN; a third terminal of the transistor MN2 is connected to a power supply terminal; second terminals of the transistors MN3, MN4 and MNN are respectively connected to the power supply terminal; third terminals of the transistors MN3, MN4 and MNN serving as output terminals are respectively connected to other circuits and output corresponding currents, where the current output by the transistor MN3 is 1<0>, the current output by the transistor MN4 is I<I>, and the current output by the transistor MNN is I<N>. The principle of the circuit is as follows: by utilizing "virtual short" characteristic of the operational amplifier OP1, a voltage at the source of the transistor MN1 is clamped at a reference voltage VREF. The transistors MN1 and MN2, and the resistor R1 form a reference current generation circuit. Ideally, the current IREF of this current source circuit is equal to VREF/R1. However, in order to obtain a high-precision reference current, the resistor R1 needs to use an off-chip high-precision resistor, which will increase the number of pins of the chip and the area of the PCB board, thereby increasing the cost.

In view of the above technologies, it is an urgent problem to be solved by those skilled in the art to seek a high-precision current source.

Document "Low-voltage low-power CMOS rail-to-rail V-I converters" by C. Azcona et al., presents three compact and simple CMOS voltage-to-current (V-I) converter schemes attaining rail-to-rail operation with a highly linear V-I relationship over a (-40, +140°C) temperature range.

Document EP 3 893 397 A1 discloses a current source and/or current sink digital-to-analog converter (DAC), including a DAC circuit that converts a digital code to an analog current or voltage signal, an optional transconductance circuit that converts a voltage output of the DAC circuit into a current signal, and an output circuit that amplifies a current output of the DAC circuit or optionally amplifies a current output of the transconductance circuit to set a desired high current output for application to an output of the current source and/or current sink DAC.

Document CN 113 282 130 A discloses a high-precision LED constant current driving circuit, including a reference voltage generation circuit for the power supply and a voltage-to-current conversion circuit.

### SUMMARY

An object of the present disclosure is to provide a current source and an electronic device, to solve the problem of increasing the number of pins of the entire chip and the area of the PCB board caused by using an external high-precision resistor in the prior art. The invention is set out in the appended set of claims.

To solve the above technical problem, the present disclosure provides a current source, including: a reference voltage generation circuit and a current generation circuit, where the reference voltage generation circuit includes: a first operational amplifier, a first transistor, and a zero temperature coefficient resistor circuit;
an inverting input terminal of the first operational amplifier is connected to a bias voltage terminal, a non-inverting input terminal of the first operational amplifier is connected to a first terminal of the zero temperature coefficient resistor circuit, an output terminal of the first operational amplifier is connected to a first terminal of the first transistor, and the first operational amplifier is configured to obtain a bias voltage of the bias voltage terminal and transmit the bias voltage to the zero temperature coefficient resistor circuit;
a second terminal of the first transistor is connected to a power supply of a chip, and a third terminal of the first transistor is connected to a second terminal of the zero temperature coefficient resistor circuit;
a third terminal of the zero temperature coefficient resistor circuit is connected to a signal control terminal, a fourth terminal of the zero temperature coefficient resistor circuit is connected to a first terminal of the current generation circuit, a second terminal of the current generation circuit is connected to a corresponding external circuit, and the zero temperature coefficient resistor circuit is configured to receive a control signal sent by the signal control terminal, adjust the bias voltage according to the control signal, and transmit the adjusted bias voltage to the current generation circuit, such that the current generation circuit outputs the corresponding current according to the adjusted bias voltage,
the zero temperature coefficient resistor circuit includes a first resistor module, a second resistor module, a third resistor module, and a resistor string module;
a first terminal of the first resistor module is connected to a first terminal of the resistor string module, and the first terminal of the first resistor module and the first terminal of the resistor string module jointly serve as the second terminal of the zero temperature coefficient resistor circuit and are connected to the third terminal of the first transistor; a second terminal of the first resistor module is connected to a first terminal of the second resistor module, and the second terminal of the first resistor module and the first terminal of the second resistor module jointly serve as the first terminal of the zero temperature coefficient resistor circuit and are connected to the non-inverting input terminal of the first operational amplifier;
a second terminal of the second resistor module is connected to a first terminal of the third resistor module and a second terminal of the resistor string module;
a second terminal of the third resistor module is grounded; and
a third terminal of the resistor string module serves as the third terminal of the zero temperature coefficient resistor circuit and is connected to the signal control terminal, and a fourth terminal of the resistor string module serves as the fourth terminal of the zero temperature coefficient resistor circuit and is connected to the first terminal of the current generation circuit.

To solve the above technical problem, the present disclosure also provides an electronic device including the above current source.

The current source provided by the present disclosure includes: a reference voltage generation circuit and a current generation circuit, where the reference voltage generation circuit includes: a first operational amplifier, a first transistor, and a zero temperature coefficient resistor circuit; the inverting input terminal of the first operational amplifier is connected to the bias voltage terminal, the non-inverting input terminal of the first operational amplifier is connected to the first terminal of the zero temperature coefficient resistor circuit, and the output terminal of the first operational amplifier is connected to the first terminal of the first transistor, and the first operational amplifier is configured to obtain the bias voltage of the bias voltage terminal and transmit the bias voltage to the zero temperature coefficient resistor circuit; the second terminal of the first transistor is connected to the power supply of the chip, and the third terminal of the first transistor is connected to the second terminal of the zero temperature coefficient resistor circuit; the third terminal of the zero temperature coefficient resistor circuit is connected to the signal control terminal, the fourth terminal of the zero temperature coefficient resistor circuit is connected to the first terminal of the current generation circuit, the second terminal of the current generation circuit is connected to the corresponding external circuit, and the zero temperature coefficient resistor circuit is configured to receive the control signal sent by the signal control terminal, adjust the bias voltage according to the control signal, and transmit the adjusted bias voltage to the current generation circuit, such that the current generation circuit outputs the corresponding current according to the adjusted bias voltage. It can be seen that, in the present disclosure, it reduces the influence of chip manufacturing process and operating voltage on the precision of the current source by slightly adjusting the bias voltage, and it uses resistors with different temperature coefficients to form a zero temperature coefficient resistor, which reduces the problem of the drift of the output current due to the change of temperature, avoids the use of an external high-precision resistor and improves the precision of the current source.

### BRIEF DESCRIPTION OF THE DRAWINGS

To more clearly illustrate the embodiments of the present disclosure, the accompanying drawings which need to be used in the embodiments will be introduced briefly below. Obviously, the drawings described below are only some embodiments of the present disclosure. For those skilled in the art, other drawings can also be obtained according to these drawings without any creative effort.
Fig. 1 is a circuit diagram of a current source provided in the prior art;
Fig. 2 is a circuit diagram of a high-precision current source provided in an embodiment of the present disclosure;
Fig. 3 is a simulation curve of the resistance value of a positive temperature coefficient resistor changing with temperature provided in an embodiment of the present disclosure;
Fig. 4 is a simulation curve of the resistance value of a negative temperature coefficient resistor changing with temperature provided in an embodiment of the present disclosure;
Fig. 5 is a simulation curve of the resistance value of a zero temperature coefficient resistor circuit changing with temperature provided in an embodiment of the present disclosure; and
Fig. 6 is a complete circuit diagram of a high-precision current source provided in an embodiment of the present disclosure.

### DETAILED DESCRIPTION

The technical solutions in the embodiments of the present disclosure will be clearly and completely described below with reference to the accompanying drawings in the embodiments of the present disclosure. Obviously, the described embodiments are merely a part but not all of the embodiments of the present disclosure. Based on the embodiments in the present disclosure, all the other embodiments obtained by those skilled in the art without any creative effort shall all fall within the protection scope of the present disclosure.

The core of the present disclosure is to provide a high-precision current source and an electronic device.

In order to enable those skilled in the art to better understand the solution of the present disclosure, the present disclosure will be further described in detail below with reference to the accompanying drawings and specific embodiments.

To solve the above technical problem, the present disclosure provides a high-precision current source. As shown in Fig. 2, the high-precision current source includes: a reference voltage generation circuit 1 and a current generation circuit 2, where the reference voltage generation circuit 1 includes: a first operational amplifier U1, a first transistor Q1, and a zero temperature coefficient resistor circuit 3, and the zero temperature coefficient resistor circuit 3 can refer to a circuit in which the resistance values of resistors basically do not change with temperature or change very small with temperature. In addition, the reference voltage generation circuit 1 also includes an external circuit 4. The connection relationship of the reference voltage generation circuit is as follows: an inverting input terminal of the first operational amplifier U1 is connected to a bias voltage terminal, a non-inverting input terminal of the first operational amplifier U1 is connected to a first terminal of the zero temperature coefficient resistor circuit 3, an output terminal of the first operational amplifier U1 is connected to a first terminal of the first transistor Q1, and the first operational amplifier U1 is configured to obtain a bias voltage (VREF) of the bias voltage terminal and transmit the bias voltage to the zero temperature coefficient resistor circuit 3; a second terminal of the first transistor Q1 is connected to a power supply (VCC) of a chip, and a third terminal of the first transistor Q1 is connected to a second terminal of the zero temperature coefficient resistor circuit 3; a third terminal of the zero temperature coefficient resistor circuit 3 is connected to a signal control terminal, and a fourth terminal of the zero temperature coefficient resistor circuit 3 is connected to a first terminal of the current generation circuit 2, a second terminal of the current generation circuit 2 is connected to a corresponding external circuit 4, and the zero temperature coefficient resistor circuit 3 is configured to receive a control signal (TRIM<N:0>) sent by the signal control terminal, adjust the bias voltage (VREF) according to the control signal (TRIM<N:0>), and transmit the adjusted bias voltage (VREFOUT) to the current generation circuit 2, such that the current generation circuit 2 outputs the corresponding current according to the adjusted bias voltage (VREFOUT).

In a specific embodiment, the principle of the high-precision current source provided by the present disclosure is as follows: the first operational amplifier U1 obtains the bias voltage (VREF) and transmits the bias voltage (VREF) to the zero temperature coefficient resistor circuit 3 through the first transistor Q1, while receiving the bias voltage (VREF), the zero temperature coefficient resistor circuit 3 also receives the control signal (TRIM<N:0>) sent by the signal control terminal. The zero temperature coefficient resistor circuit 3 adjusts the bias voltage (VREF) according to the control signal (TRIM<N:0>) to obtain the adjusted bias voltage (VREFOUT), and then transmits the adjusted bias voltage to the current generation circuit 2, such that the current generation circuit 2 outputs the corresponding current to the corresponding external circuit 4 according to the adjusted bias voltage (VREFOUT).

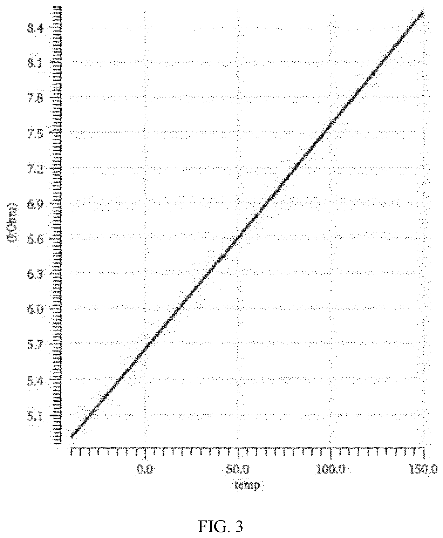

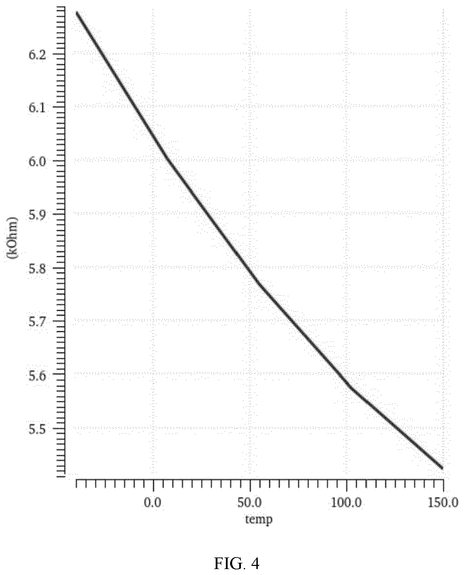

It should be noted that the reason why the zero temperature coefficient resistor circuit 3 used in the present disclosure adjusts its bias voltage (VREF) is as follows: the zero temperature coefficient resistor circuit 3 uses resistors with positive and negative temperature coefficients connected in series in proportion, thereby achieving the minimum change of the resistance value within the temperature range in which the circuit operates, and thus reducing the influence of temperature on the precision of the current source. Figs. 3, 4, and 5 are simulation curves of resistance values of a positive temperature coefficient resistor, a negative temperature coefficient resistor, and the zero temperature coefficient resistor circuit 3 proposed in the present disclosure changing with temperature, respectively. It can be seen that the zero temperature coefficient resistor can control the change of the resistance value within a very small range. In Figs. 3, 4 and 5, the horizontal axis temp represents the temperature, and the vertical axis kOhm represents the resistance value.

As a preferred option, the first transistor Q1 is a first P-type MOS transistor. The gate of the first P-type MOS transistor serves as the first terminal of the first transistor Q1 and is connected to the output terminal of the first operational amplifier U1, the source of the first P-type MOS transistor serves as the second terminal of the first transistor Q1 and is connected to the power supply VCC of the chip, the drain of the first P-type MOS transistor serves as the third terminal of the first transistor Q1 and is connected to the second terminal of the zero temperature coefficient resistor circuit 3.

The high-precision current source provided by the present disclosure includes: a reference voltage generation circuit and a current generation circuit, where the reference voltage generation circuit includes: a first operational amplifier, a first transistor, and a zero temperature coefficient resistor circuit; the inverting input terminal of the first operational amplifier is connected to the bias voltage terminal, the non-inverting input terminal of the first operational amplifier is connected to the first terminal of the zero temperature coefficient resistor circuit, the output terminal of the first operational amplifier is connected to the first terminal of the first transistor, and the first operational amplifier is configured to obtain the bias voltage of the bias voltage terminal and transmit the bias voltage to the zero temperature coefficient resistor circuit; the second terminal of the first transistor is connected to the power supply of the chip, and the third terminal of the first transistor is connected to the second terminal of the zero temperature coefficient resistor circuit; the third terminal of the zero temperature coefficient resistor circuit is connected to the signal control terminal, and the fourth terminal of the zero temperature coefficient resistor circuit is connected to the first terminal of the current generation circuit; the second terminal of the current generation circuit is connected to the corresponding external circuit, and the zero temperature coefficient resistor circuit is configured to receive the control signal sent by the signal control terminal, adjust the bias voltage according to the control signal, and transmit the adjusted bias voltage to the current generation circuit, such that the current generation circuit outputs the corresponding current according to the adjusted bias voltage. It can be seen that, in the present disclosure, it reduces the influence of chip manufacturing process and operating voltage on the precision of the current source by slightly adjusting the bias voltage, and it uses resistors with different temperature coefficients to form a zero temperature coefficient resistor, which reduces the problem of the drift of the output current due to the change of temperature, avoids the use of an external high-precision resistor and improves the precision of the current source.

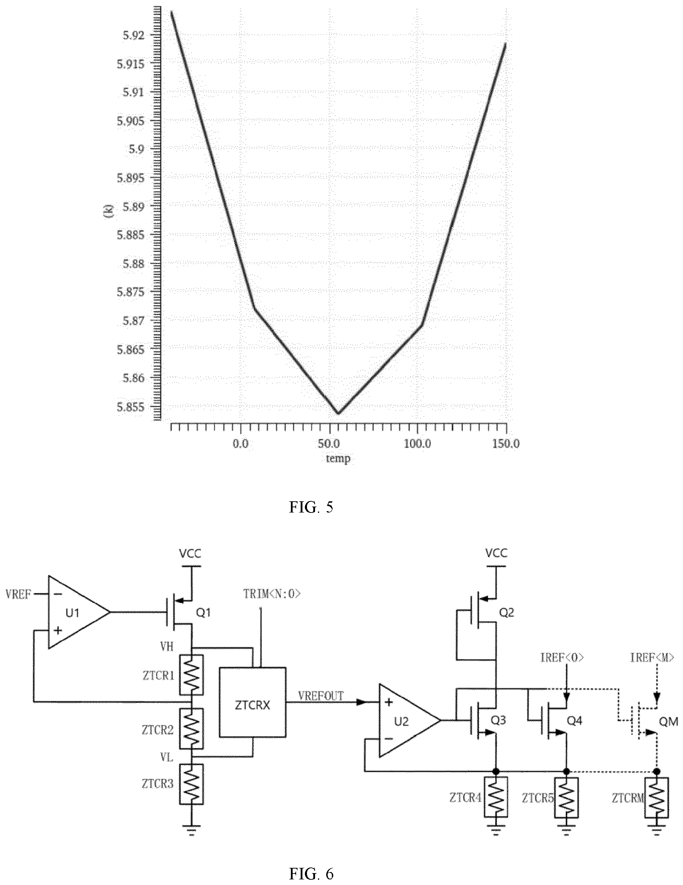

On the basis of the above embodiment, as shown in Fig. 6, the zero temperature coefficient resistor circuit 3 includes a first resistor module ZTCR1, a second resistor module ZTCR2, a third resistor module ZTCR3, and a resistor string module ZTCRX. The connection relationship of these modules is as follows: a first terminal of the first resistor module ZTCR1 is connected to a first terminal of the resistor string module ZTCRX, and they jointly serve as the second terminal of the zero temperature coefficient resistor circuit 3 and are connected to the third terminal of the first transistor Q1; a second terminal of the first resistor module ZTCR1 is connected to a first terminal of the second resistor module ZTCR2, and they jointly serve as the first terminal of the zero temperature coefficient resistor circuit 3 and are connected to the non-inverting input terminal of the first operational amplifier U1; a second terminal of the second resistor module ZTCR2 is connected to a first terminal of the third resistor module ZTCR3 and a second terminal of the resistor string module ZTCRX; a second terminal of the third resistor module ZTCR3 is grounded; a third terminal of the resistor string module ZTCRX serves as the third terminal of the zero temperature coefficient resistor circuit 3 and is connected to the signal control terminal, and a fourth terminal of the resistor string module ZTCRX serves as the fourth terminal of the zero temperature coefficient resistor circuit 3 and is connected to the first terminal of the current generation circuit 2.

As a preferred option, the resistor string module includes N resistor modules with the same structure. The circuit connection relationship of these resistor modules is as follows: a first terminal of an initial resistor module serves as the first terminal of the resistor string module and is connected to the first terminal of the first resistor module; a first terminal of a Xth resistor module is connected to a second terminal of a (X-1)th resistor module; a second terminal of a Nth resistor module serves as the second terminal of the resistor string module and is connected to the second terminal of the second resistor module and the first terminal of the third resistor module; a third terminal of each resistor module serves as the third terminal of the resistor string module and is connected to the signal control terminal, such that each resistor module can determine the corresponding target resistor module according to the control signal sent by the signal control terminal, and connect a fourth terminal of the target resistor module which serves as the fourth terminal of the resistor string module, to the first terminal of the current generation circuit; where N is an integer greater than 0, and X is an integer greater than 1 and less than N.

In a specific embodiment, according to the circuit shown in Fig. 6, the circuit principle is as follows: one terminal of the resistor string module ZTCRX is connected between the first resistor module ZTCR1 and the first transistor Q1, and another terminal is connected between the second resistor module ZTCR2 and the third resistor module ZTCR3. One of several output ports in the resistor string module is selected to output the adjusted bias voltage (VREFOUT) according to its control signal (TRIM<N:0>). The value of the adjusted bias voltage (VREFOUT) is between the highest voltage value VH and the lowest voltage value VL, where the highest voltage value VH is the voltage value between the first resistor module ZTCR1 and the first transistor Q1, and the lowest voltage value VL is the voltage value between the second resistor module ZTCR2 and the third resistor module ZTCR3. That is to say, the resistor string module ZTCRX includes N resistor modules with the same structure, the third terminal of each resistor module is configured to receive the control signal (TRIM<N:0>). In the entire resistor string module ZTCRX, under the selection of the control signal, one of the resistor modules is selected as the target resistor module. At this time, the fourth terminal of the selected resistor module (i.e., target resistor module) serves as the fourth terminal of the resistor string module and is connected to the first terminal of the current generation circuit, so as to achieve the purpose of adjusting the bias voltage (VREF) according to the control signal (TRIM<N:0>). It should be clearly noted that each resistor module has a fourth terminal, and only in the case that the resistor module is selected as the target resistor module, its fourth terminal serves as the fourth terminal of the resistor string module and is connected to the first terminal of the current generation circuit.

As a preferred option, the resistor modules in the first resistor module ZTCR1, the second resistor module ZTCR2, the third resistor module ZTCR3, and the resistor string module ZTCRX have the same structure, and are all formed by resistors with positive and negative temperature coefficients proportionally connected in series.

Based on the above embodiments, the current generation circuit 2 includes a target current circuit and a mirror current circuit. The connection relationship of these circuits is as follows: a first terminal of the target current circuit serves as the first terminal of the current generation circuit and is connected to the fourth terminal of the zero temperature coefficient resistor circuit; a second terminal of the target current circuit is connected to a first terminal of the mirror current circuit; and a second terminal of the mirror current circuit serves as the second terminal of the current generation circuit and is connected to the corresponding external circuit.

As a preferred option, as shown in Fig. 6, the target current circuit includes: a second operational amplifier U2, a second transistor Q2, a third transistor Q3, and a fourth resistor module ZTCR4. Their connection relationship is as follows: a first terminal of the second transistor Q2 is connected to the power supply VCC of the chip, and a second terminal of the second transistor Q2 is connected to a third terminal of the second transistor Q2 and a first terminal of the third transistor Q3; a non-inverting input terminal of the second operational amplifier U2 serves as the first terminal of the target current circuit and is connected to the fourth terminal of the zero temperature coefficient resistor circuit 3; an inverting input terminal of the second operational amplifier U2 is connected to a second terminal of the third transistor Q3 and a first terminal of the fourth resistor module ZTCR4; an output terminal of the second operational amplifier U2 is connected to a third terminal of the third transistor Q3, and they jointly serve as the second terminal of the target circuit current and are connected to the first terminal of the mirror current circuit; and a second terminal of the fourth resistor module ZTCR4 is grounded.

As a preferred option, the mirror current circuit includes M mirror circuits with the same structure, where M is an integer greater than 1. The connection relationship of the mirror circuits is as follows: first terminals of the mirror circuits are connected to each other, serve as the first terminal of the mirror current circuit and are connected to the second terminal of the target current circuit; and second terminals of the mirror circuits serve as the second terminal of the mirror current circuit and are respectively connected to a corresponding external circuit. As shown in Fig. 6, where the number of mirror circuits in Fig. 6 being two is taken as an example. For the first mirror circuit, the mirror circuit includes Q4 and ZTCR5, where a first terminal of Q4 serves as the first terminal of the mirror circuit and is connected to the second terminal of the target current circuit, a second terminal of Q4 serves as the second terminal of the mirror circuit and is connected to a corresponding external circuit and the output current is IREF<0>, and a third terminal of Q4 is connected to a first terminal of ZTCR5; and a second terminal of ZTCR5 is grounded. For the Mth mirror circuit, the mirror circuit includes QM and ZTCRM, where a first terminal of QM serves as the first terminal of the mirror circuit and is connected to the second terminal of the target current circuit, a second terminal of QM serves as the second terminal of the mirror circuit and is connected to a corresponding external circuit and the output current is IREF<M>, and a third terminal of QM is connected to the first terminal of ZTCRM; and a second terminal of ZTCRM is grounded.

The second transistor Q2 is a second P-type MOS transistor; the third transistor Q3 is a first N-type MOS transistor; and the fourth transistor Q4 is a second N-type MOS transistor. The circuit connection relationship of these transistors is as follows: the source of the second P-type MOS transistor serves as the first terminal of the second transistor Q2 and is connected to the power supply VCC of the chip, and the gate of the second P-type MOS transistor which serves as the second terminal of the second transistor Q2 is connected to the drain of the second P-type MOS transistor which serves as the third terminal of the second transistor Q2; the drain of the first N-type MOS transistor serves as the first terminal of the third transistor Q3 and is connected to the gate of the second P-type MOS transistor, the gate of the first N-type MOS transistor serves as the third terminal of the third transistor Q3 and is connected to the output terminal of the second operational amplifier U2, and the source of the first N-type MOS transistor serves as the second terminal of the third transistor Q3 and is connected to the first terminal of the fourth resistor module ZTCR4. The gate of the second N-type MOS transistor serves as the first terminal of the fourth transistor Q4 (QM) and is connected to the second terminal of the target current circuit, the source of the second N-type MOS transistor serves as the second terminal of the fourth transistor Q4 (QM) and is connected to the corresponding external circuit 4, and the drain of the second N-type MOS transistor serves as the third terminal of the fourth transistor Q4 (QM) and is connected to the first terminal of the fifth resistor module ZTCR5 (ZTCRM).

In the circuit shown in Fig. 6, the current generation circuit 2 is composed of U2, Q2, Q3, Q4, QM, ZTCR4, ZTCR5, and ZTCRM, and can be expanded on the basis of the dotted line part shown in the figure according to the number of external circuits. The adjusted bias voltage (VREFOUT) generated by the reference voltage generation circuit 1 serves as the clamping voltage of the current generation circuit 2. High-precision reference current (i.e., the output current) is generated through U2, Q2, Q3, and ZTCR4. Q4 and ZTCR5 (including the expandable QM and ZTCRM) are used to mirror this reference current. The size ratio of Q4 to Q3 and the size ratio of ZTCR5 to ZTCR4 need to be maintained at 1:1, so as to ensure the mirroring precision.

It should be noted that the embodiments provided in the present disclosure are merely one type of implementable embodiments and can be configured according to user needs.

It can be seen that, in the present disclosure, it reduces the influence of chip manufacturing process and operating voltage on the precision of the current source by slightly adjusting the bias voltage, and it uses resistors with different temperature coefficients to form a zero temperature coefficient resistor, which reduces the problem of the drift of the output current due to the change of temperature, avoids the use of an external high-precision resistor and improves the precision of the current source.

To solve the above technical problem, the present disclosure also provides an electronic device. The electronic device includes the above high-precision current source and has the same beneficial effects. The specific embodiments thereof are the same as those of the above high-precision current source, and will not be repeated in the present disclosure.

The high-precision current source and the electronic device provided by the present disclosure are described in detail above. Various embodiments in the specification are described in a progressive manner. Each embodiment focuses on the differences from other embodiments, and the same or similar parts between the various embodiments can be referred to each other. Regarding the device disclosed in the embodiments, since it corresponds to the method disclosed in the embodiments, the description is relatively simple, and the relevant part can be referred to the description of the corresponding part in the method. It should be noted that, for those skilled in the art, several improvements and modifications can be made to the present disclosure without departing from the principle of the present disclosure as defined in the appended claims, and these improvements and modifications also fall within the protection scope of the claims of the present disclosure.

It should also be noted that, in this specification, relational terms such as "first" and "second" are only used to distinguish one entity or operation from another entity or operation, and do not necessarily require or imply any such actual relationship or order between these entities or operations. Moreover, the terms "comprise/include," "contain" or any other variants thereof are intended to cover non-exclusive inclusion, such that a process, method, article or device that includes a series of elements not also includes those elements, but also includes other elements not explicitly listed, or elements inherent to such process, method, article or device. Without further limitation, an element defined by the statement "comprise/include a..." does not exclude the presence of any additional identical element in the process, method, article or device that includes the recited elements.

## Claims

1. A current source, comprising: a reference voltage generation circuit (1) and a current generation circuit (2), wherein the reference voltage generation circuit comprises: a first operational amplifier (U1), a first trans transistor (Q1), and a zero temperature coefficient resistor circuit (3);
an inverting input terminal of the first operational amplifier (U1) is connected to a bias voltage terminal, a non-inverting input terminal of the first operational amplifier (U1) is connected to a first terminal of the zero temperature coefficient resistor circuit (3), an output terminal of the first operational amplifier (U1) is connected to a first terminal of the first transistor (Q1) and the first operational amplifier (U1) is configured to obtain a bias voltage of the bias voltage terminal and transmit the bias voltage to the zero temperature coefficient resistor circuit;
a second terminal of the first transistor (Q1) is configured to be connected to a power supply of a chip, and a third terminal of the first transistor (Q1) is connected to a second terminal of the zero temperature coefficient resistor circuit (3); and
a third terminal of the zero temperature coefficient resistor circuit (3) is connected to a signal control terminal, and a fourth terminal of the zero temperature coefficient resistor circuit (3) is connected to a first terminal of the current generation circuit (2), a second terminal of the current generation circuit (2) is configured to be connected to a corresponding external circuit (4), and the zero temperature coefficient resistor circuit (3) is configured to receive a control signal sent by the signal control terminal, adjust the bias voltage according to the control signal, and transmit the adjusted bias voltage to the current generation circuit, such that the current generation circuit outputs a corresponding current according to the adjusted bias voltage,
wherein the zero temperature coefficient resistor circuit (3) comprises a first resistor module (ZTCR1), a second resistor module (ZTXR2), a third resistor module (ZTCR3), and a resistor string module (ZTCRX);
a first terminal of the first resistor module (ZTCR1) is connected to a first terminal of the resistor string module (ZTCRX), and the first terminal of the first resistor module and the first terminal of the resistor string module jointly serve as the second terminal of the zero temperature coefficient resistor circuit (3) and are connected to the third terminal of the first transistor; a second terminal of the first resistor module (ZTCR1) is connected to a first terminal of the second resistor module (ZTCR2),
and the second terminal of the first resistor module and the first terminal of the second resistor module jointly serve as the first terminal of the zero temperature coefficient resistor circuit and are connected to the non-inverting input terminal of the first operational amplifier;
a second terminal of the second resistor module (ZTCR2) is connected to a first terminal of the third resistor module (ZTCR3) and a second terminal of the resistor string module (ZTCRX);
a second terminal of the third resistor module (ZTCR3) is grounded; and
a third terminal of the resistor string module ZTCRX) serves as the third terminal of the zero temperature coefficient resistor circuit (3) and is connected to the signal control terminal, and a fourth terminal of the resistor string module serves as the fourth terminal of the zero temperature coefficient resistor circuit (3) and is connected to the first terminal of the current generation circuit (2).

2. The current source according to claim 1, wherein the resistor string module comprises N resistor modules with the same structure;
a first terminal of an initial resistor module in the N resistor modules serves as the first terminal of the resistor string module and is connected to the first terminal of the first resistor module;
a first terminal of a Xth resistor module is connected to a second terminal of a (X-1)th resistor module in the N resistor modules;
a second terminal of a Nth resistor module in the N resistor modules serves as the second terminal of the resistor string module and is connected to the second terminal of the second resistor module and the first terminal of the third resistor module;
a third terminal of each of the N resistor modules serves as the third terminal of the resistor string module and is connected to the signal control terminal, such that each of the N resistor modules determines a corresponding target resistor module according to the control signal sent by the signal control terminal, and connects a fourth terminal of the target resistor module serving as the fourth terminal of the resistor string module to the first terminal of the current generation circuit;
wherein N is an integer greater than 0, and X is an integer greater than 1 and less than N.

3. The current source according to claim 1, wherein the current generation circuit comprises a target current circuit and a mirror current circuit;
a first terminal of the target current circuit serves as the first terminal of the current generation circuit and is connected to the fourth terminal of the zero temperature coefficient resistor circuit; a second terminal of the target current circuit is connected to a first terminal of the mirror current circuit; and
a second terminal of the mirror current circuit serves as the second terminal of the current generation circuit and is connected to the corresponding external circuit.

4. The current source according to claim 3, wherein the target current circuit comprises: a second operational amplifier, a second transistor, a third transistor, and a fourth resistor module;
a first terminal of the second transistor is connected to the power supply of the chip, and a second terminal of the second transistor is connected to a third terminal of the second transistor and a first terminal of the third transistor;
a non-inverting input terminal of the second operational amplifier serves as the first terminal of the target current circuit and is connected to the fourth terminal of the zero temperature coefficient resistor circuit; an inverting input terminal of the second operational amplifier is connected to a second terminal of the third transistor and a first terminal of the fourth resistor module; an output terminal of the second operational amplifier is connected to a third terminal of the third transistor, and the output terminal of the second operational amplifier and the third terminal of the third transistor jointly serve as the second terminal of the target current circuit and are connected to the first terminal of the mirror current circuit; and
a second terminal of the fourth resistor module is grounded.

5. The current source according to claim 3, wherein the mirror current circuit comprises M mirror circuits with the same structure, and each mirror circuit of the mirror circuits comprises a first terminal and a second terminal, M being an integer greater than 1;
first terminals of the mirror circuits are connected to each other, serve as the first terminal of the mirror current circuit and are connected to the second terminal of the target current circuit; and
second terminals of the mirror circuits serve as the second terminal of the mirror current circuit and are respectively connected to a corresponding external circuit.

6. The current source according to claim 5, wherein the mirror circuit comprises:
a fourth transistor and a fifth resistor module;
a first terminal of the fourth transistor serves as the first terminal of the mirror circuit and is connected to the second terminal of the target current circuit, a second terminal of the fourth transistor serves as the second terminal of the mirror circuit and is connected to a corresponding external circuit, and a third terminal of the fourth transistor is connected to a first terminal of the fifth resistor module; and
a second terminal of the fifth resistor module is grounded.

7. The current source according to claim 4, wherein the first transistor is a first P-type MOS transistor; the second transistor is a second P-type MOS transistor; and the third transistor is a first N-type MOS transistor;
a gate of the first P-type MOS transistor serves as the first terminal of the first transistor and is connected to the output terminal of the first operational amplifier; a source of the first P-type MOS transistor serves as the second terminal of the first transistor and is connected to the power supply of the chip; and a drain of the first P-type MOS transistor serves as the third terminal of the first transistor and is connected to the second terminal of the zero temperature coefficient resistor circuit;
a source of the second P-type MOS transistor serves as the first terminal of the second transistor and is connected to the power supply of the chip; and a gate of the second P-type MOS transistor serving as the second terminal of the second transistor is connected to a drain of the second P-type MOS transistor serving as the third terminal of the second transistor; and
a drain of the first N-type MOS transistor serves as the first terminal of the third transistor and is connected to the gate of the second P-type MOS transistor; a gate of the first N-type MOS transistor serves as the third terminal of the third transistor and is connected to the output terminal of the second operational amplifier; and a source of the first N-type MOS transistor serves as the second terminal of the third transistor and is connected to the first terminal of the fourth resistor module.

8. The current source according to claim 6, wherein the fourth transistor is a second N-type MOS transistor;
a gate of the second N-type MOS transistor serves as the first terminal of the fourth transistor and is connected to the second terminal of the target current circuit; a source of the second N-type MOS transistor serves as the second terminal of the fourth transistor and is connected to the corresponding external circuit; and a drain of the second N-type MOS transistor serves as the third terminal of the fourth transistor and is connected to the first terminal of the fifth resistor module.

9. An electronic device, comprising the current source according to any one of claims 1-8.

## Patentansprüche

1. Eine Stromquelle, umfassend: eine Referenzspannungserzeugungsschaltung (1) und eine Stromerzeugungsschaltung (2), wobei die Referenzspannungserzeugungsschaltung (1) einen ersten Operationsverstärker (U1), einen ersten Transistor (Q1) und eine Nulltemperaturkoeffizienten-Widerstandsschaltung (3) umfasst;
wobei ein invertierender Eingangsanschluss des ersten Operationsverstärkers (U1) mit einem Vorspannungsanschluss verbunden ist, ein nichtinvertierender Eingangsanschluss des ersten Operationsverstärkers (U1) mit einem ersten Anschluss der Nulltemperaturkoeffizienten-Widerstandsschaltung (3) verbunden ist, ein Ausgangsanschluss des ersten Operationsverstärkers (U1) mit einem ersten Anschluss des ersten Transistors (Q1) verbunden ist und der erste Operationsverstärker (U1) dazu eingerichtet ist, eine Vorspannung des Vorspannungsanschlusses zu erhalten und die Vorspannung an die Nulltemperaturkoeffizienten-Widerstandsschaltung (3) zu übertragen;
wobei ein zweiter Anschluss des ersten Transistors (Q1) dazu eingerichtet ist, mit einer Versorgungsspannung eines Chips verbunden zu werden, und ein dritter Anschluss des ersten Transistors (Q1) mit einem zweiten Anschluss der Nulltemperaturkoeffizienten-Widerstandsschaltung (3) verbunden ist; und
wobei ein dritter Anschluss der Nulltemperaturkoeffizienten-Widerstandsschaltung (3) mit einem Steuersignalanschluss verbunden ist und ein vierter Anschluss der Nulltemperaturkoeffizienten-Widerstandsschaltung (3) mit einem ersten Anschluss der Stromerzeugungsschaltung (2) verbunden ist, wobei ein zweiter Anschluss der Stromerzeugungsschaltung (2) dazu eingerichtet ist, mit einer entsprechenden externen Schaltung (4) verbunden zu werden, und wobei die Nulltemperaturkoeffizienten-Widerstandsschaltung (3) dazu eingerichtet ist, ein von dem Steuersignalanschluss gesendetes Steuersignal zu empfangen, die Vorspannung entsprechend dem Steuersignal einzustellen und die eingestellte Vorspannung an die Stromerzeugungsschaltung (2) zu übertragen, derart, dass die Stromerzeugungsschaltung (2) einen entsprechenden Strom entsprechend der eingestellten Vorspannung ausgibt, wobei die Nulltemperaturkoeffizienten-Widerstandsschaltung (3) ein erstes Widerstandsmodul (ZTCR1), ein zweites Widerstandsmodul (ZTCR2), ein drittes Widerstandsmodul (ZTCR3) und ein Widerstandskettenmodul (ZTCRX) umfasst;
wobei ein erster Anschluss des ersten Widerstandsmoduls (ZTCR1) mit einem ersten Anschluss des Widerstandskettenmoduls (ZTCRX) verbunden ist und der erste Anschluss des ersten Widerstandsmoduls (ZTCR1) und der erste Anschluss des Widerstandskettenmoduls (ZTCRX) gemeinsam den zweiten Anschluss der Nulltemperaturkoeffizienten-Widerstandsschaltung (3) bilden und mit dem dritten Anschluss des ersten Transistors (Q1) verbunden sind;
wobei ein zweiter Anschluss des ersten Widerstandsmoduls (ZTCR1) mit einem ersten Anschluss des zweiten Widerstandsmoduls (ZTCR2) verbunden ist und der zweite Anschluss des ersten Widerstandsmoduls (ZTCR1) und der erste Anschluss des zweiten Widerstandsmoduls (ZTCR2) gemeinsam den ersten Anschluss der Nulltemperaturkoeffizienten-Widerstandsschaltung (3) bilden und mit dem nichtinvertierenden Eingangsanschluss des ersten Operationsverstärkers (U1) verbunden sind;
wobei ein zweiter Anschluss des zweiten Widerstandsmoduls (ZTCR2) mit einem ersten Anschluss des dritten Widerstandsmoduls (ZTCR3) und einem zweiten Anschluss des Widerstandskettenmoduls (ZTCRX) verbunden ist;
wobei ein zweiter Anschluss des dritten Widerstandsmoduls (ZTCR3) geerdet ist; und
wobei ein dritter Anschluss des Widerstandskettenmoduls (ZTCRX) den dritten Anschluss der Nulltemperaturkoeffizienten-Widerstandsschaltung (3) bildet und mit dem Steuersignalanschluss verbunden ist und ein vierter Anschluss des Widerstandskettenmoduls (ZTCRX) den vierten Anschluss der Nulltemperaturkoeffizienten-Widerstandsschaltung (3) bildet und mit dem ersten Anschluss der Stromerzeugungsschaltung (2) verbunden ist.

2. Stromquelle nach Anspruch 1, wobei das Widerstandskettenmodul N Widerstandsmodule mit derselben Struktur umfasst;
wobei ein erster Anschluss eines Anfangswiderstandsmoduls der N Widerstandsmodule den ersten Anschluss des Widerstandskettenmoduls bildet und mit dem ersten Anschluss des ersten Widerstandsmoduls verbunden ist;
wobei ein erster Anschluss eines X-ten Widerstandsmoduls mit einem zweiten Anschluss eines (X-1)-ten Widerstandsmoduls der N Widerstandsmodule verbunden ist;
wobei ein zweiter Anschluss eines N-ten Widerstandsmoduls der N Widerstandsmodule den zweiten Anschluss des Widerstandskettenmoduls bildet und mit dem zweiten Anschluss des zweiten Widerstandsmoduls sowie dem ersten Anschluss des dritten Widerstandsmoduls verbunden ist;
wobei ein dritter Anschluss jedes der N Widerstandsmodule den dritten Anschluss des Widerstandskettenmoduls bildet und mit dem Steuersignalanschluss verbunden ist, derart, dass jedes der N Widerstandsmodule ein entsprechendes Zielwiderstandsmodul entsprechend dem von dem Steuersignalanschluss gesendeten Steuersignal bestimmt und einen vierten Anschluss des Zielwiderstandsmoduls, der den vierten Anschluss des Widerstandskettenmoduls bildet, mit dem ersten Anschluss der Stromerzeugungsschaltung verbindet;
wobei N eine ganze Zahl größer als 0 ist und X eine ganze Zahl größer als 1 und kleiner als N ist.

3. Stromquelle nach Anspruch 1, wobei die Stromerzeugungsschaltung eine Zielstromschaltung und eine Stromspiegelschaltung umfasst;
wobei ein erster Anschluss der Zielstromschaltung den ersten Anschluss der Stromerzeugungsschaltung bildet und mit dem vierten Anschluss der Nulltemperaturkoeffizienten-Widerstandsschaltung verbunden ist, ein zweiter Anschluss der Zielstromschaltung mit einem ersten Anschluss der Stromspiegelschaltung verbunden ist; und
wobei ein zweiter Anschluss der Stromspiegelschaltung den zweiten Anschluss der Stromerzeugungsschaltung bildet und mit der entsprechenden externen Schaltung verbunden ist.

4. Stromquelle nach Anspruch 3, wobei die Zielstromschaltung umfasst: einen zweiten Operationsverstärker, einen zweiten Transistor, einen dritten Transistor und ein viertes Widerstandsmodul;
wobei ein erster Anschluss des zweiten Transistors mit der Versorgungsspannung des Chips verbunden ist, und ein zweiter Anschluss des zweiten Transistors mit einem dritten Anschluss des zweiten Transistors sowie einem ersten Anschluss des dritten Transistors verbunden ist;
wobei ein nichtinvertierender Eingangsanschluss des zweiten Operationsverstärkers den ersten Anschluss der Zielstromschaltung bildet und mit dem vierten Anschluss der Nulltemperaturkoeffizienten-Widerstandsschaltung verbunden ist; ein invertierender Eingangsanschluss des zweiten Operationsverstärkers mit einem zweiten Anschluss des dritten Transistors sowie einem ersten Anschluss des vierten Widerstandsmoduls verbunden ist; ein Ausgangsanschluss des zweiten Operationsverstärkers mit einem dritten Anschluss des dritten Transistors verbunden ist, und der Ausgangsanschluss des zweiten Operationsverstärkers sowie der dritte Anschluss des dritten Transistors gemeinsam den zweiten Anschluss der Zielstromschaltung bilden und mit dem ersten Anschluss der Stromspiegelschaltung verbunden sind; und
wobei ein zweiter Anschluss des vierten Widerstandsmoduls geerdet ist.

5. Stromquelle nach Anspruch 3, wobei die Stromspiegelschaltung M Spiegelschaltungen mit derselben Struktur umfasst, und jede der Spiegelschaltungen einen ersten Anschluss und einen zweiten Anschluss umfasst, wobei M eine ganze Zahl größer als 1 ist;
wobei erste Anschlüsse der Spiegelschaltungen miteinander verbunden sind, den ersten Anschluss der Stromspiegelschaltung bilden und mit dem zweiten Anschluss der Zielstromschaltung verbunden sind; und
wobei zweite Anschlüsse der Spiegelschaltungen den zweiten Anschluss der Stromspiegelschaltung bilden und jeweils mit einer entsprechenden externen Schaltung verbunden sind.

6. Stromquelle nach Anspruch 5, wobei die Spiegelschaltung umfasst: einen vierten Transistor und ein fünftes Widerstandsmodul;
wobei ein erster Anschluss des vierten Transistors den ersten Anschluss der Spiegelschaltung bildet und mit dem zweiten Anschluss der Zielstromschaltung verbunden ist, ein zweiter Anschluss des vierten Transistors den zweiten Anschluss der Spiegelschaltung bildet und mit einer entsprechenden externen Schaltung verbunden ist, und ein dritter Anschluss des vierten Transistors mit einem ersten Anschluss des fünften Widerstandsmoduls verbunden ist; und
wobei ein zweiter Anschluss des fünften Widerstandsmoduls geerdet ist.

7. Stromquelle nach Anspruch 4, wobei der erste Transistor ein erster P-Kanal-MOS-Transistor ist; der zweite Transistor ein zweiter P-Kanal-MOS-Transistor ist; und der dritte Transistor ein erster N-Kanal-MOS-Transistor ist;
wobei ein Gate des ersten P-Kanal-MOS-Transistors den ersten Anschluss des ersten Transistors bildet und mit dem Ausgangsanschluss des ersten Operationsverstärkers verbunden ist; ein Source-Anschluss des ersten P-Kanal-MOS-Transistors den zweiten Anschluss des ersten Transistors bildet und mit der Versorgungsspannung des Chips verbunden ist; und ein Drain-Anschluss des ersten P-Kanal-MOS-Transistors den dritten Anschluss des ersten Transistors bildet und mit dem zweiten Anschluss der Nulltemperaturkoeffizienten-Widerstandsschaltung verbunden ist;
wobei ein Source-Anschluss des zweiten P-Kanal-MOS-Transistors den ersten Anschluss des zweiten Transistors bildet und mit der Versorgungsspannung des Chips verbunden ist; und ein Gate des zweiten P-Kanal-MOS-Transistors, das den zweiten Anschluss des zweiten Transistors bildet, mit einem Drain-Anschluss des zweiten P-Kanal-MOS-Transistors, der den dritten Anschluss des zweiten Transistors bildet, verbunden ist; und
wobei ein Drain-Anschluss des ersten N-Kanal-MOS-Transistors den ersten Anschluss des dritten Transistors bildet und mit dem Gate des zweiten P-Kanal-MOS-Transistors verbunden ist; ein Gate des ersten N-Kanal-MOS-Transistors den dritten Anschluss des dritten Transistors bildet und mit dem Ausgangsanschluss des zweiten Operationsverstärkers verbunden ist; und ein Source-Anschluss des ersten N-Kanal-MOS-Transistors den zweiten Anschluss des dritten Transistors bildet und mit dem ersten Anschluss des vierten Widerstandsmoduls verbunden ist.

8. Stromquelle nach Anspruch 6, wobei der vierte Transistor ein zweiter N-Kanal-MOS-Transistor ist;
wobei ein Gate des zweiten N-Kanal-MOS-Transistors den ersten Anschluss des vierten Transistors bildet und mit dem zweiten Anschluss der Zielstromschaltung verbunden ist; ein Source-Anschluss des zweiten N-Kanal-MOS-Transistors den zweiten Anschluss des vierten Transistors bildet und mit der entsprechenden externen Schaltung verbunden ist; und ein Drain-Anschluss des zweiten N-Kanal-MOS-Transistors den dritten Anschluss des vierten Transistors bildet und mit dem ersten Anschluss des fünften Widerstandsmoduls verbunden ist.

9. Elektronische Vorrichtung, umfassend die Stromquelle nach einem der Ansprüche 1 bis 8.

## Revendications

1. Source de courant, comprenant un circuit de génération de tension de référence (1) et un circuit de génération de courant (2), dans laquelle le circuit de génération de tension de référence comprend un premier amplificateur opérationnel (U1), un premier transistor (Q1) et un circuit résistif à coefficient de température nul (3) ;
une borne d'entrée inverseuse du premier amplificateur opérationnel (U1) est connectée à une borne de tension de polarisation, une borne d'entrée non inverseuse du premier amplificateur opérationnel (U1) est connectée à une première borne du circuit résistif à coefficient de température nul (3), une borne de sortie du premier amplificateur opérationnel (U1) est connectée à une première borne du premier transistor (Q1), et le premier amplificateur opérationnel (U1) est configuré pour obtenir une tension de polarisation de la borne de tension de polarisation et transmettre la tension de polarisation au circuit résistif à coefficient de température nul ;
une deuxième borne du premier transistor (Q1) est configurée pour être connectée à une alimentation électrique d'une puce, et une troisième borne du premier transistor (Q1) est connectée à une deuxième borne du circuit résistif à coefficient de température nul (3) ; et
une troisième borne du circuit résistif à coefficient de température nul (3) est connectée à une borne de commande de signal, une quatrième borne du circuit résistif à coefficient de température nul (3) est connectée à une première borne du circuit de génération de courant (2), une deuxième borne du circuit de génération de courant (2) est configurée pour être connectée à un circuit externe correspondant (4), et le circuit résistif à coefficient de température nul (3) est configuré pour recevoir un signal de commande envoyé par la borne de commande de signal, ajuster la tension de polarisation en fonction du signal de commande, et transmettre la tension de polarisation ajustée au circuit de génération de courant, de sorte que le circuit de génération de courant délivre un courant correspondant en fonction de la tension de polarisation ajustée ;
dans laquelle le circuit résistif à coefficient de température nul (3) comprend un premier module résistif (ZTCR1), un deuxième module résistif (ZTCR2), un troisième module résistif (ZTCR3) et un module de chaîne résistive (ZTCRX) ;
une première borne du premier module résistif (ZTCR1) est connectée à une première borne du module de chaîne résistive (ZTCRX), et la première borne du premier module résistif et la première borne du module de chaîne résistive servent conjointement de deuxième borne du circuit résistif à coefficient de température nul (3) et sont connectées à la troisième borne du premier transistor ; une deuxième borne du premier module résistif (ZTCR1) est connectée à une première borne du deuxième module résistif (ZTCR2), et la deuxième borne du premier module résistif et la première borne du deuxième module résistif servent conjointement de première borne du circuit résistif à coefficient de température nul et sont connectées à la borne d'entrée non inverseuse du premier amplificateur opérationnel ;
une deuxième borne du deuxième module résistif (ZTCR2) est connectée à une première borne du troisième module résistif (ZTCR3) et à une deuxième borne du module de chaîne résistive (ZTCRX) ;
une deuxième borne du troisième module résistif (ZTCR3) est connectée à la masse ; et
une troisième borne du module de chaîne résistive (ZTCRX) sert de troisième borne du circuit résistif à coefficient de température nul (3) et est connectée à la borne de commande de signal, et une quatrième borne du module de chaîne résistive sert de quatrième borne du circuit résistif à coefficient de température nul (3) et est connectée à la première borne du circuit de génération de courant (2).

2. Source de courant selon la revendication 1, dans laquelle le module de chaîne résistive comprend N modules résistifs de structure identique ;
une première borne d'un module résistif initial parmi les N modules résistifs sert de première borne du module de chaîne résistive et est connectée à la première borne du premier module résistif ;
une première borne d'un X-ième module résistif est connectée à une deuxième borne d'un (X-1)-ième module résistif parmi les N modules résistifs ;
une deuxième borne d'un N-ième module résistif parmi les N modules résistifs sert de deuxième borne du module de chaîne résistive et est connectée à la deuxième borne du deuxième module résistif et à la première borne du troisième module résistif ;
une troisième borne de chacun des N modules résistifs sert de troisième borne du module de chaîne résistive et est connectée à la borne de commande de signal, de sorte que chacun des N modules résistifs détermine un module résistif cible correspondant en fonction du signal de commande envoyé par la borne de commande de signal, et connecte une quatrième borne du module résistif cible servant de quatrième borne du module de chaîne résistive à la première borne du circuit de génération de courant ;
où N est un entier supérieur à 0, et X est un entier supérieur à 1 et inférieur à N.

3. Source de courant selon la revendication 1, dans laquelle le circuit de génération de courant comprend un circuit de courant cible et un circuit de miroir de courant ;
une première borne du circuit de courant cible sert de première borne du circuit de génération de courant et est connectée à la quatrième borne du circuit résistif à coefficient de température nul ; une deuxième borne du circuit de courant cible est connectée à une première borne du circuit de miroir de courant ; et
une deuxième borne du circuit de miroir de courant sert de deuxième borne du circuit de génération de courant et est connectée au circuit externe correspondant.

4. Source de courant selon la revendication 3, dans laquelle le circuit de courant cible comprend un deuxième amplificateur opérationnel, un deuxième transistor, un troisième transistor et un quatrième module résistif ;
une première borne du deuxième transistor est connectée à l'alimentation électrique de la puce, et une deuxième borne du deuxième transistor est connectée à une troisième borne du deuxième transistor et à une première borne du troisième transistor ;
une borne d'entrée non inverseuse du deuxième amplificateur opérationnel sert de première borne du circuit de courant cible et est connectée à la quatrième borne du circuit résistif à coefficient de température nul ; une borne d'entrée inverseuse du deuxième amplificateur opérationnel est connectée à une deuxième borne du troisième transistor et à une première borne du quatrième module résistif ; une borne de sortie du deuxième amplificateur opérationnel est connectée à une troisième borne du troisième transistor, et la borne de sortie du deuxième amplificateur opérationnel et la troisième borne du troisième transistor servent conjointement de deuxième borne du circuit de courant cible et sont connectées à la première borne du circuit de miroir de courant ; et
une deuxième borne du quatrième module résistif est connectée à la masse.

5. Source de courant selon la revendication 3, dans laquelle le circuit de miroir de courant comprend M circuits miroirs de structure identique, et chaque circuit miroir des circuits miroirs comprend une première borne et une deuxième borne, M étant un entier supérieur à 1 ;
les premières bornes des circuits miroirs sont connectées entre elles, servent de première borne du circuit de miroir de courant et sont connectées à la deuxième borne du circuit de courant cible ; et
les deuxièmes bornes des circuits miroirs servent de deuxième borne du circuit de miroir de courant et sont respectivement connectées à un circuit externe correspondant.

6. Source de courant selon la revendication 5, dans laquelle le circuit miroir comprend un quatrième transistor et un cinquième module résistif ;
une première borne du quatrième transistor sert de première borne du circuit miroir et est connectée à la deuxième borne du circuit de courant cible, une deuxième borne du quatrième transistor sert de deuxième borne du circuit miroir et est connectée à un circuit externe correspondant, et une troisième borne du quatrième transistor est connectée à une première borne du cinquième module résistif ; et
une deuxième borne du cinquième module résistif est connectée à la masse.

7. Source de courant selon la revendication 4, dans laquelle le premier transistor est un premier transistor MOS de type P, le deuxième transistor est un deuxième transistor MOS de type P, et le troisième transistor est un premier transistor MOS de type N ;
une grille du premier transistor MOS de type P sert de première borne du premier transistor et est connectée à la borne de sortie du premier amplificateur opérationnel ; une source du premier transistor MOS de type P sert de deuxième borne du premier transistor et est connectée à l'alimentation électrique de la puce ; et un drain du premier transistor MOS de type P sert de troisième borne du premier transistor et est connecté à la deuxième borne du circuit résistif à coefficient de température nul ;
une source du deuxième transistor MOS de type P sert de première borne du deuxième transistor et est connectée à l'alimentation électrique de la puce ; et une grille du deuxième transistor MOS de type P servant de deuxième borne du deuxième transistor est connectée à un drain du deuxième transistor MOS de type P servant de troisième borne du deuxième transistor ; et
un drain du premier transistor MOS de type N sert de première borne du troisième transistor et est connecté à la grille du deuxième transistor MOS de type P ; une grille du premier transistor MOS de type N sert de troisième borne du troisième transistor et est connectée à la borne de sortie du deuxième amplificateur opérationnel ; et une source du premier transistor MOS de type N sert de deuxième borne du troisième transistor et est connectée à la première borne du quatrième module résistif.

8. Source de courant selon la revendication 6, dans laquelle le quatrième transistor est un deuxième transistor MOS de type N ;
une grille du deuxième transistor MOS de type N sert de première borne du quatrième transistor et est connectée à la deuxième borne du circuit de courant cible ; une source du deuxième transistor MOS de type N sert de deuxième borne du quatrième transistor et est connectée au circuit externe correspondant ; et un drain du deuxième transistor MOS de type N sert de troisième borne du quatrième transistor et est connecté à la première borne du cinquième module résistif.

9. Dispositif électronique, comprenant la source de courant selon l'une quelconque des revendications 1 à 8.
